# EUROPÄISCHE PATENTANMELDUNG

(11) **EP 2 284 598 A1**
(43) Veröffentlichungstag der Anmeldung: **16.02.2011**
(21) Anmeldenummer: 09010083.5
(22) Anmeldetag: 05.08.2009
(51) Int. Cl.: G02C 5/12

(54) **Rastend verschwenbarer Nasenauflegeteil**

(71) Anmelder: ALPINA SPORTS GmbH, 86316 Friedberg (DE)
(72) Erfinder: Zipfel, Robert, 86153 Augsburg (DE)
(74) Vertreter: Bauerschmidt, Peter

(57) **Zusammenfassung**

Die Erfindung betrifft eine Brille, die mindestens eine Brillenscheibe, eine Nasenausnehmung und eine im Bereich der Nasenausnehmung vorgesehene Nasenauflegeteil-Anordnung (5) mit zwei verschwenkbaren Nasenauflegeteilen (9) umfasst. Jedes Nasenauflegeteil (9) weist auf einen Tragkörper (10), der aus einem ersten Material gebildet ist, und ein Kissenteil (11), das drehfest mit dem Tragkörper (10) verbunden ist und aus einem zweiten Material gebildet ist, wobei sich das zweite Material des Kissenteils (11) von dem ersten Material des Tragkörpers (10) unterscheidet und weicher als das erste Material des Tragkörpers (10) ist. Ferner umfasst die Nasenauflegeteil-Anordnung (5) zwei Lageraufnahmen (16) zur Schwenk-Lagerung der Nasenauflegeteile (9), wobei jede Lageraufnahme (16) und der dieser zugeordnete Tragkörper (10) miteinander in Rastverbindung stehen.

## Beschreibung

Die Erfindung betrifft eine Brille, die beispielsweise eine optische Brille, eine Sonnenbrille, eine Sportbrille oder eine Arbeitsschutzbrille sein kann. Die Brille umfasst mindestens eine Brillenscheibe, eine Nasenausnehmung und eine im Bereich der Nasenausnehmung vorgesehene Nasenauflegeteil-Anordnung.

Brillen mit Nasenauflegeteil-Anordnungen sind durch offenkundige Vorbenutzung allgemein bekannt. Die Nasenauflegeteil-Anordnungen können verstellbare Nasenauflegeteile bzw. Nasenpads zur äußeren Anlage an der Nase des Brillenträgers aufweisen.

Aus der WO 2005/119343 A2 sind Brillen bekannt. Eine der offenbarten Brille umfasst zwei Nasenauflegeteile, die über jeweilige Kugelgelenke an einem Trägerteil schwenkbar gelagert sind. Nachteilig bei dieser bekannten Brille ist, dass die Nasenauflegeteile bei Gebrauch der Brille öfters nachgestellt werden müssen. Außerdem ist die Einstellung der Nasenauflegeteile an den jeweiligen Brillenträger bzw. an dessen Nase äußerst schwierig.

Hiervon ausgehend liegt der Erfindung die Aufgabe zugrunde, eine Brille bereitzustellen, deren Nasenauflegeteile äußerst einfach an den Brillenträger angepasst werden können. Außerdem soll die eingestellte Lage der Nasenauflegeteile auch über einen äußerst langen Zeitraum beibehalten werden können.

Diese Aufgabe wird erfindungsgemäß durch die in dem Anspruch 1 angegebenen Merkmale gelöst. Der Kern der Erfindung liegt darin, dass jede Lageraufnahme und der dieser zugeordnete Tragkörper miteinander in Rastverbindung stehen. Der Tragkörper und die Lageraufnahme sind somit relativ zueinander rastend verstellbar. Ferner ist jeder Tragkörper drehfest mit dem zugeordneten Kissenteil verbunden. Das Kissenteil ist aus einem weicheren Material als der Tragkörper gebildet. Es wird eine funktionsfähige Rastverbindung zwischen dem Tragkörper und der zugeordneten Lageraufnahme geschaffen, wobei die Kissenteile auch einen hohen Tragekomfort bieten.

Weitere vorteilhafte Ausgestaltungen sind in den Unteransprüchen angegeben.

Nachfolgend wird die Erfindung anhand eines bevorzugten Ausführungsbeispiels in Verbindung mit der Zeichnung näher erläutert. Dabei zeigen:
- Fig. 1: eine perspektivische Ansicht einer erfindungsgemäßen Brille von schräg hinten,

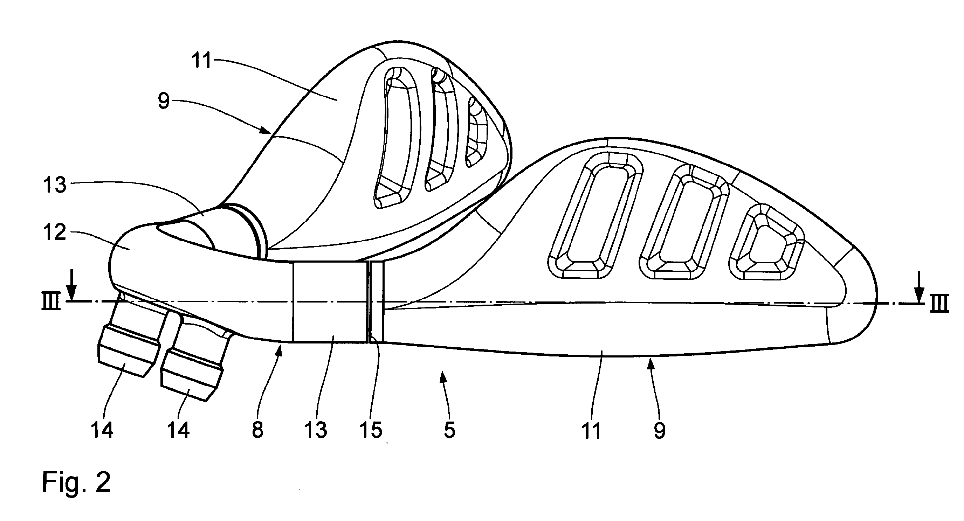

- Fig. 2: eine vergrößerte, perspektivische Ansicht der Nasenaufle- geteil-Anordnung der in Fig. 1 dargestellten Brille, wobei sich die Nasenauflegeteil-Anordnung in einem zusammen- gesetzten Zustand befindet,

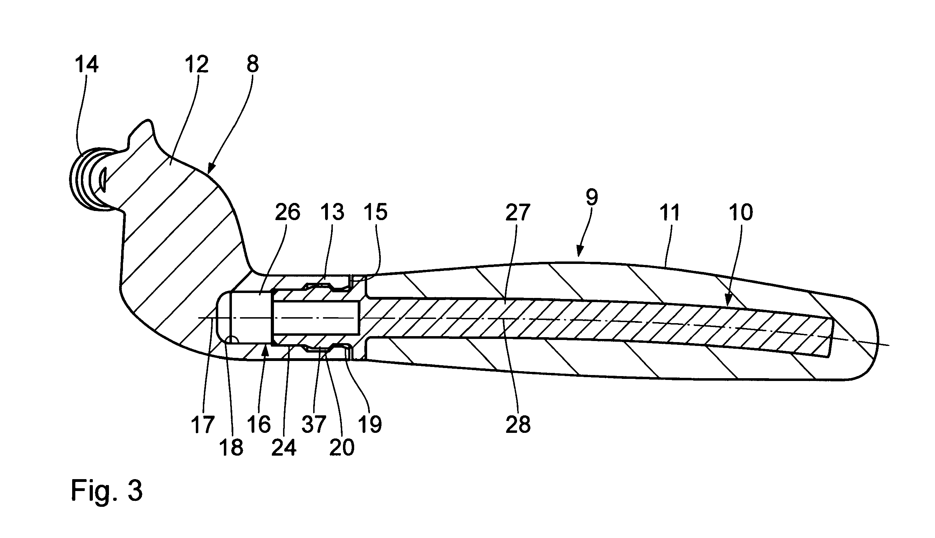

- Fig. 3: einen Schnitt durch die in Fig. 2 dargestellte Nasenauflege- teil-Anordnung gemäß der Schnittlinie III-III in Fig. 2,

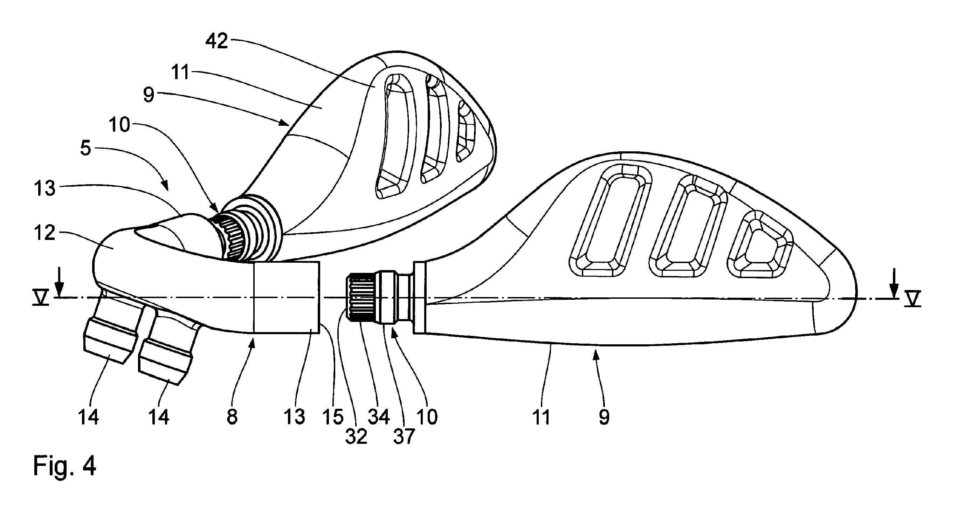

- Fig. 4: eine der Fig. 2 entsprechende Darstellung der Nasenaufle- geteil-Anordnung, wobei die Nasenauflegeteil-Anordnung auseinandergezogen bzw. mit demontierten Nasenauflege- teilen dargestellt ist,

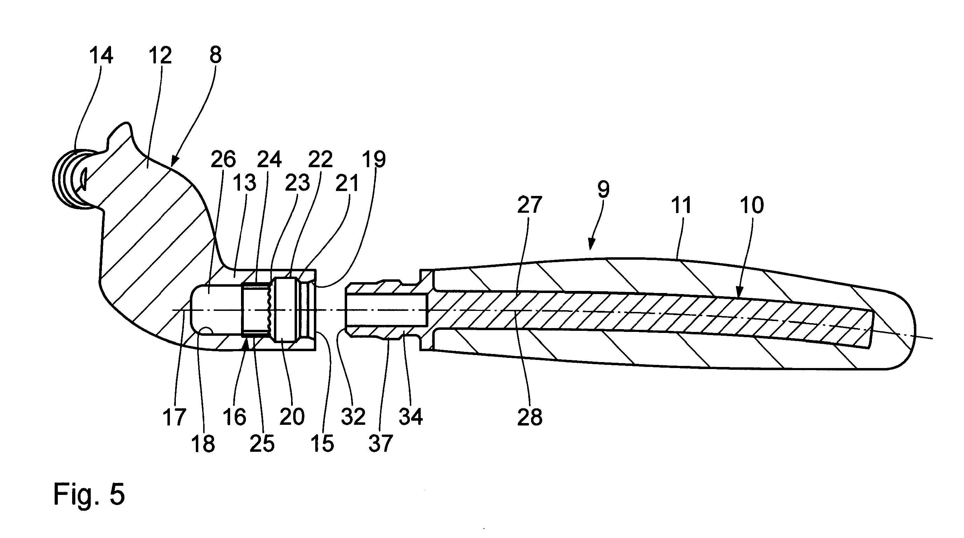

- Fig. 5: einen Schnitt durch die in Fig. 4 dargestellte Nasenauflege- teil-Anordnung gemäß der Schnittlinie V-V in Fig. 4, und

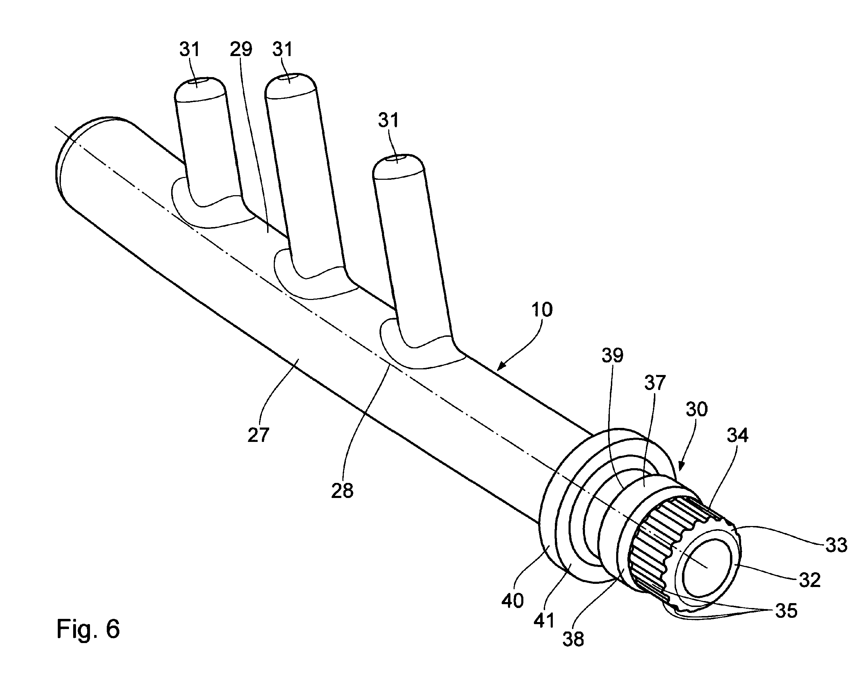

- Fig. 6: eine perspektivische Ansicht eines Tragkörpers der Nase- nauflegeteil-Anordnung der Brille gemäß Fig. 1.

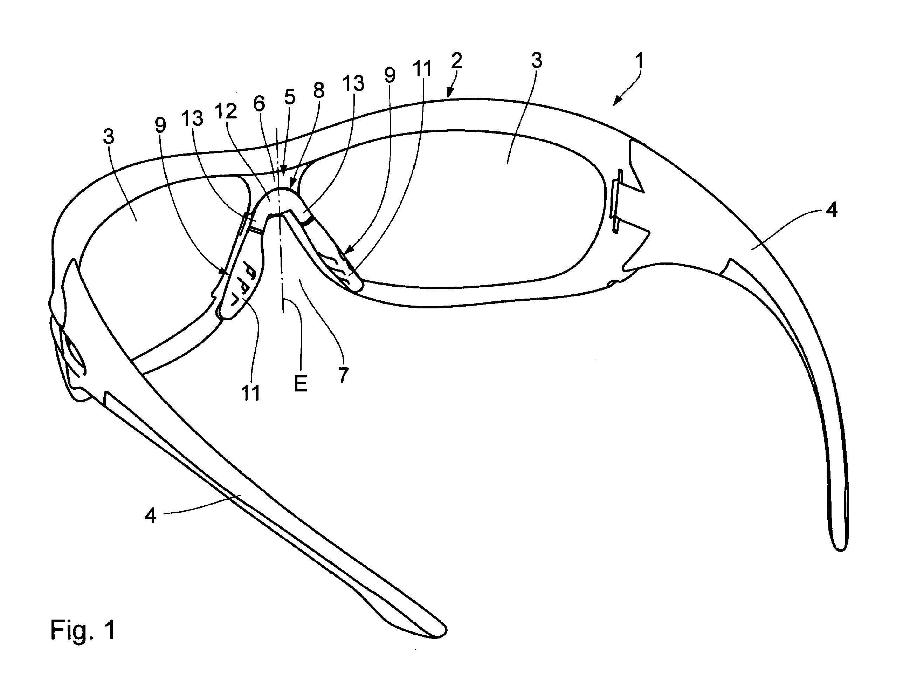

Eine in Fig. 1 in der Gesamtheit gezeigte Brille 1 umfasst einen Brillenrahmen 2 und zwei Brillenscheiben 3, die in entsprechenden Scheibenöffnungen des Brillenrahmens 2 angeordnet sind. Ferner umfasst die Brille 1 zwei Bügel 4, die seitlich an dem Brillenrahmen 2 angelenkt sind. Die Brille 1 weist auch eine Nasenauflegeteil-Anordnung 5 auf, die zwischen den Brillenscheiben 3 an einem Brillen-Nasenbereich 6 des Brillenrahmens 2 befestigt ist. Der Nasenbereich 6 des Brillenrahmens 2 befindet sich oberhalb einer Brillen-Nasenausnehmung 7 des Brillenrahmens 2. Die Brille 1 ist bezüglich einer Mittelebene E symmetrisch ausgebildet, die mittig durch die Nasenauflegeteil-Anordnung 5 geht. Wenn die Brille 1 bestimmungsgemäß getragen wird, ragt die Nase des Brillenträgers in die Nasenausnehmung 7 der Brille 1, während die Nasenauflegeteil-Anordnung 5 die Brille 1 gegenüber der Nase des Brillenträgers abstützt.

Der Brillenrahmen 2 kann auch einstückig mit den Brillenscheiben 3 verbunden sein. Die Nasenauflegeteil-Anordnung 5 kann auch direkt an den Brillenscheiben 3 befestigt sein. Anstelle der zwei Brillenscheiben 3 kann auch eine einzige gemeinsame Brillenscheibe (=Monoscheibe oder Schild) vorgesehen sein. Die Nasenauflegeteil-Anordnung 5 kann dann direkt an der gemeinsamen Brillenscheibe in deren Nasenbereich befestigt sein. Ferner können die Bügel 4 auch direkt an der Brillenscheibe bzw. den Brillenscheiben 3 angelenkt sein.

Die Nasenauflegeteil-Anordnung 5 umfasst ein Adapterstück 8, mit dem zwei separate Nasenauflegeteile 9 jeweils in Rastverbindung stehen. Jedes Nasenauflegeteil 9 umfasst einen Tragkörper 10 und ein Kissenteil 11, das drehfest mit dem Tragkörper 10 verbunden ist. Das Kissenteil 11 umgibt den Tragkörper 10 größtenteils. Es besteht aus einem Material, das weicher bzw. flexibler, insbesondere wesentlich weicher bzw. wesentlich flexibler, als das Material des Tragkörpers 10 ist. Das Material des Kissenteils 11 unterscheidet sich somit von dem Material des Tragkörpers 10.

Das Adapterstück 8 ist einstückig ausgestaltet und ist aus einem Kunststoffmaterial, vorzugsweise aus Polybutylenterephthalat (PBT), gebildet. Es kann sich um 1 % bis 5 %, vorzugsweise um 2 % bis 4 % und am bevorzugtesten um etwa 3 % weiten, ohne eine bleibende Verformung zu erfahren. Das Adapterstück 8 weist eine Kugeldruckhärte auf, die mindestens 90 MPa beträgt. Vorzugsweise liegt die Kugeldruckhärte des Adapterstücks 8 zwischen 110 MPa und 150 MPa. Andere Materialien können auch Anwendung finden.

Das Adapterstück 8 weist im Wesentlichen eine V-förmige Gestalt auf. Das Adapterstück 8 hat somit einen zentralen Fußbereich 12 und zwei Schenkelkörper 13, die von dem Fußbereich 12 schräg nach seitlich außen vorspringen. Von der dem Nasenbereich 6 zugewandten Seite des Adapterstücks 8 stehen von dem Fußbereich 12 zwei zueinander parallele Zapfen 14 vor, die in zwei entsprechende Ausnehmungen in dem Nasenbereich 6 des Brillenrahmens 2 greifen. Zwischen den Zapfen 14 und den entsprechenden Ausnehmungen liegt eine Steck- bzw. Rastverbindung vor, sodass das Adapterstück 8 unbeweglich, aber wieder lösbar an dem Brillenrahmen 2 befestigt ist. Der Fußbereich 12 bildet den oberen Teil des Adapterstücks 8, wobei die Schenkelkörper 13 von dem Fußbereich 12 nach unten und seitlich außen vorspringen. Alternativ kann anstelle der Zapfen 14 auch ein einziger Zapfen vorgesehen sein, der im Querschnitt unrund, vorzugsweise oval oder rechteckig, ausgebildet ist.

Nachdem die Schenkelkörper 13 identisch ausgebildet sind, wird nachfolgend nur ein Schenkelkörper 13 detailliert beschrieben. Der Schenkelkörper 13 weist ein freies Ende 15 auf. Ferner hat der Schenkelkörper 13 eine endseitige Lageraufnahme 16, die in dem freien Ende 15 mündet. Die Lageraufnahme 16 erstreckt somit von dem freien Ende 15 des Schenkelkörpers 13 aus und ist von dem freien Ende 15 aus zugänglich. Der Schenkelkörper 13 ist in dem Bereich der Lageraufnahme 16 im Wesentlichen als rotationssymmetrische Aufnahmebuchse ausgebildet, die einen ringförmigen Querschnitt hat.

Die Lageraufnahme 16 hat eine Längsmittelachse 17 und eine Innenwandung 18, die die Lageraufnahme 16 begrenzt.

Die Lageraufnahme 16 umfasst einen äußeren Einführabschnitt 19, der an das freie Ende 15 des Schenkelkörpers 13 angrenzt. Die Lageraufnahme 16 verjüngt sich gleichmäßig in dem Einführabschnitt 19 entlang der Längsmittelachse 17 von dem freien Ende 15 aus weglaufend. Die Innenwandung 18 der Lageraufnahme 16 verläuft somit bei dem Einführabschnitt 19 schräg zu der Längsmittelachse 17.

An den Einführabschnitt 19 schließt sich ein Rückhalteabschnitt 20 an, der im Längsschnitt wannenartig ausgestaltet ist. Der Rückhalteabschnitt 20 hat einen vorderen Schrägbereich 21, einen an den vorderen Schrägbereich 21 angrenzenden, rückspringenden Aufnahmebereich 22 und einen sich an den Aufnahmebereich 22 anschließenden hinteren Schrägbereich 23. Entlang des vorderen Schrägbereichs 21 verbreitert sich die Lageraufnahme 16 von dem freien Ende 15 aus weglaufend wieder gleichmäßig. Der Schrägbereich 21 und der Schrägbereich 23 haben jeweils Ringflächen, die schräg zu der Längsmittelachse 17 orientiert sind. In dem Aufnahmebereich 22 hat die Lageraufnahme 16 einen gleichbleibenden Innendurchmesser. Entlang des hinteren Schrägbereichs 23 verjüngt sich die Lageraufnahme 16 wieder von dem freien Ende 15 aus weglaufend.

An den hinteren Schrägbereich 23 schließt sich ein Rastabschnitt 24 mit einer Vielzahl von Rastzähnen 25 an. Die Rastzähne 25 sind länglich ausgebildet und erstrecken sich in Richtung der Längsmittelachse 17. Sie springen von der Innenwandung 18 radial hervor und weisen identische angulare Abstände zueinander auf. Der Rastabschnitt 24 erstreckt sich vollständig um die Längsmittelachse 17, so dass dieser umlaufend bzw. geschlossen ist. Der Rastabschnitt 24 ist somit als innenverzahnter Zahnkranz ausgebildet. Jeder Rastzahl 25 weist eine radiale Höhe zwischen 0,05 mm und 0,5 mm und vorzugsweise zwischen 0,07 mm und 0,2 mm auf.

An den Rastabschnitt 24 schließt sich dann ein innerer Endabschnitt 26 an, dessen Innendurchmesser im Wesentlichen dem Innendurchmesser des Rastabschnitts 24 entspricht.

Der Einführabschnitt 19, der Rückhalteabschnitt 20, der Rastabschnitt 24 und der Endabschnitt 26 bilden zusammen die Lageraufnahme 16, die im Wesentlichen zylindrisch ist. Der Innendurchmesser der Lageraufnahme 16 bei dem Aufnahmebereich 22 ist größer als bei dem Rastabschnitt 24 und dem Einführabschnitt 19 und dem Endabschnitt 26.

Die Nasenauflegeteile 9 sind prinzipiell identisch ausgebildet, so dass nachfolgend nur ein Nasenauflegeteil 9 detailliert beschrieben wird. Wie bereits erwähnt, umfasst ein Nasenauflegeteil 9 einen Tragkörper 10 und ein Kissenteil 11. Jedes Nasenauflegeteil 9 ist somit zweiteilig ausgebildet.

Der Tragkörper 10 ist einstückig ausgebildet. Er hat eine Längsmittelachse 28 und einen länglichen, im Wesentlichen zylindrischen Kern 27 mit einem Haltebereich 29. Der Kern 27 verläuft etwas gekrümmt. Ferner hat der Tragkörper 10 einen im Wesentlichen hohlzylindrischen, endseitigen Anschluss 30, der sich axial an den Kern 27 anschließt und im Wesentlichen als Rotationskörper ausgebildet ist. In dem Haltebereich 29 springen Haltearme 31 in einer gemeinsamen Richtung radial von dem Kern 27 vor. Die Haltearme 31 können in einer gemeinsamen Ebene liegen und leicht geneigt zu dem Kern 27 verlaufen.

Der Anschluss 30 weist ein vorderes, freies Einführende 32 auf, an das sich ein vorderer Einführabschnitt 33 anschließt. Von dem Einführende 32 aus weglaufend verbreitet sich der Anschluss 30 in dem Einführabschnitt 33 gleichmäßig.

An den Einführabschnitt 33 schließt sich ein Rastabschnitt 34 mit einer Vielzahl von Rastzähnen 35 an. Die Rastzähne 35 springen nach radial außen vor und weisen jeweils einen identischen angularen Abstand zueinander auf. Sie sind länglich ausgebildet, so dass sie sich in Richtung der Längsmittelachse 28 erstrecken. Der Rastabschnitt 34 ist als außenverzahnter Zahnkranz ausgebildet.

An den Rastabschnitt 34 grenzt ein umlaufender, vorspringender Rückhalteansatz 37 an, dessen Außendurchmesser größer als der Außendurchmesser der Rastzähne 35 ist. Der Rückhalteansatz 37 weist eine abgeschrägte, vordere Stirnfläche 38 auf, die dem Einführende 32 zugewandt ist und von dem Rastabschnitt 34 ausgeht. Entlang der Stirnfläche 38 nimmt der Außendurchmesser des Anschlusses 30 von dem Einführende 32 weggehend zu. Auf der dem Einführende 32 abgewandten Seite hat der Rückhalteansatz 37 eine schräg verlaufende, hintere Rückhaltefläche 39. Entlang der Rückhaltefläche 39 verjüngt sich der Anschluss 30 von dem Einführende 32 weggehend wieder.

Benachbart zu der Rückhaltefläche 39 hat der Anschluss 30 eine Ringschulter 40, die eine dem Einführende 32 zugewandte Anschlagfläche 41 hat. Der Außendurchmesser der Ringschulter 40 ist größer als der Außendurchmesser des Rückhalteansatzes 37.

Der Anschluss 30 ist durch den Einführabschnitt 33, den Rastabschnitt 34, den Rückhalteansatz 37 und die Rückhalteschulter 40 gebildet. Der Rastabschnitt 34 mit seinen Rastzähnen 35 ist an den Rastabschnitt 24 mit seinen Rastzähnen 25 angepasst. Ferner ist der Rückhalteansatz 37 des Anschlusses 30 an den Aufnahmebereich 22 der Lageraufnahme 16 angepasst.

Der Tragkörper 10 ist durch das gleiche Material wie das Adapterstück 8 gebildet. Der Tragkörper 10 besteht somit auch aus einem Kunststoffinaterial, vorzugsweise aus Polybutylenterephthalat, und weist Materialeigenschaften auf, die den Materialeigenschaften des Adapterstücks 8 entsprechen. Es können aber auch unterschiedliche Materialien herangezogen werden, wobei deren Härte und Verformbarkeit zumindest ähnlich sind.

Das Kissenteil 11 umgibt den Kern 27 und die Haltearme 31 vollständig. Es ist drehfest mit dem inneren Tragkörper 10 verbunden und erstreckt sich bis zu der Ringschulter 40. Das Kissenteil 11 weist eine innere Nasenauflagefläche 42 zur seitlichen Anlage an einem Nasenflügel bzw. Nasenrücken eines Trägers der Brille 1 auf. Das Kissenteil 11 ist vorzugsweise aus einem Elastomer, vorzugsweise aus thermoplastischem Polyurethanelastomer, gebildet, das um den Kern 27 und die Haltearme 31 gespritzt ist. Die Haltearme 31 sorgen im Wesentlichen dafür, dass das Kissenteil 11 und der Tragkörper 10 im Wesentlichen unbeweglich zueinander sind. Das Kissenteil 11 weist eine Härte auf, die höchstens 60 Shore A beträgt. Es ist somit wesentlich weicher als der Tragkörper 10 und das Adapterstück 8.

Nachfolgend werden die Montage und die Funktion der Nasenauflegeteil-Anordnung näher beschrieben. Zunächst sind die Nasenauflagteile 9 und das Adapterstück 8 miteinander zu verbinden. Nachdem die Montage der beiden Nasenauflegeteile 9 identisch ist, wird nur die Montage eines Nasenauflegeteils 9 beschrieben. Der Anschluss 30 des Tragkörpers 10 ist dafür über sein Einführende 32 in Richtung der Längsmittelachse 28 in die Lageraufnahme 16 einzuführen. Nachdem der Einführabschnitt 33 des Anschlusses 30 und der Einführabschnitt 19 der Lageraufnahme 16 jeweils schräg verlaufen, wird das Zusammenfügen von Tragkörper 10 und Adapterstück 8 vereinfacht. Es liegt somit eine zentrierende Führung vor. Das Einführende 32 ist soweit in die Lageraufnahme 16 einzuführen, bis die Anschlagfläche 41 der Ringschulter 40 außen an dem freien Ende 15 des Adapterstücks 8 anliegt. Die Anschlagfläche 41 begrenzt somit den maximalen, axialen Einführweg des Anschlusses 30.

Der Rückhalteansatz 37 des Anschlusses 30 ist dann in den Aufnahmebereich 22 des Adapterstücks 8 eingeschnappt, wobei sich dann der Schrägbereich 21 der Lageraufnahme 16 benachbart zu der Rückhaltefläche 39 des Anschlusses 30 und der Schrägbereich 23 des Adapterstücks 8 benachbart zu der Stirnfläche 38 des Anschlusses 30 befinden. Ein ungewolltes Lösen des Tragkörpers 10 von dem Adapterstück 8 wird durch den Schrägbereich 21 des Adapterstücks 8 und die Rückhaltefläche 39 des Anschlusses 30 verhindert, die einander gegenüberliegen. Die Schnappverbindung durch den Rückhalteansatz 37 und den Aufnahmebereich 22 sorgt für eine axiale Fixierung zwischen dem Tragkörper 10 und dem Adapterstück 8. Der Rückhalteansatz 37 und der Aufnahmebereich 22 bilden jeweilige Schnappmittel. Im zusammengefügten Zustand fluchten die Längsmittelachse 17 der Lageraufnahme 16 und die Längsmittelachse 28 des Tragkörpers 10 im Wesentlichen miteinander.

Zum Einführen des Rückhalteansatzes 37 in den Aufnahmebereich 22 ist eine Einführkraft von etwa 10 N bis 50 N und bevorzugter zwischen 20 N und 40 N erforderlich. Am meisten bevorzugt wird eine Einführkraft von etwa 30 N. Zum Lösen des Rückhalteansatzes 37 von dem Aufnahmebereich 22 ist eine Lösekraft von etwa 60 N bis 100 N, vorzugsweise von 70 N bis 90 N, erforderlich. Am meisten wird eine Lösekraft von etwa 80 N bevorzugt. Beim Einführen ist die verjüngte Stelle zwischen dem Einführabschnitt 19 und dem Rückhalteabschnitt 20 zu überwinden. Beim Lösen ist der Schrägbereich 21 mit dem Rückhalteansatz 37 zu überwinden.

Die Rastzähne 25 des Adapterstücks 8 stehen mit den Rastzähnen 35 des Tragkörpers 10 in rastendem Eingriff. Zur Verschwenkung eines Nasenauflegeteils 9 um die Längsmittelachse 28 des Kerns 27 ist eine entsprechende Schwenkkraft auf das Nasenauflegeteil 9 aufzubringen. Zur Verstellung des Nasenauflegeteils 9 relativ zu dem Schenkelkörper 13 bzw. zu dem Adapterstück 8 ist eine Schwenkkraft von 20 N bis 80 N, vorzugsweise von 40 N bis 60 N, erforderlich. Am meisten bevorzugt wird eine erforderliche Schwenkkraft in Höhe von etwa 50 N. Das Nasenauflegeteil 9 ist stufenweise um insgesamt 360° verstellbar. Es sind jeweilige Rastverstellungen von 5° bis 60°, vorzugsweise von 10° bis 40°, bevorzugter von 15° bis 30° und am bevorzugtesten von 20° vorgesehen. Die Rastverbindung zwischen den Rastzähnen 25, 35 sorgt für eine Fixierung in einer Umfangsrichtung um die Längsmittelachse 28.

Es ist auch möglich, zuerst das Adapterstück 8 an dem Brillenrahmen 2 zu fixieren und dann eine Verbindung zwischen den Nasenauflegeteilen 9 und dem Adapterstück 8 herzustellen.

Nachdem der Tragkörper 10 und das Adapterstück 8 aus einem starren Material bestehen, liegt zwischen diesen eine funktionsfähige Rastverbindung durch die Rastabschnitte 24, 34 und eine funktionsfähige Schnappverbindung zwischen dem Aufnahmebereich 22 und dem Rückhalteansatz 37 vor. Das Kissenteil 11 ist dagegen aus einem wesentlich weicheren bzw. flexibleren Material gebildet, so dass ein hoher Tragekomfort der Brille 1 gegeben ist. Durch die Rastverbindung sind genau bestimmte Einstellstufen vorgegeben.

Gemäß einer alternativen Ausführungsform sind an den Tragkörpern 10 die Lageraufnahmen 16 vorgesehen. Die Anschlüsse 30 können dann an dem Adapterstück 8 vorgesehen sein.

Gemäß einer alternativen Ausführungsform sind in dem Nasenbereich 6 des Brillenrahmens 2 die zwei Lageraufnahmen 16 unmittelbar ausgebildet. Die Nasenauflegeteile 9 stehen somit direkt mit dem Brillenrahmen 2 in Rastverbindung. Ein separates Adapterstück 8 ist hier nicht erforderlich. Gemäß einem weiteren Ausführungsbeispiel ist in dem Fußbereich 12 des Adapterstücks 8 ein Schwenkgelenk vorgesehen, so dass die Schenkelkörper 13 zueinander verstellbar sind. Durch dieses Schwenkgelenk kann der Abstand der Schenkelkörper 13 zueinander verändert werden. Es können auch zwei entsprechende Schwenkgelenke in dem Fußbereich 12 vorgesehen sein, wobei dann jedem Schenkelkörper 13 ein eigenes Schwenkgelenk zugeordnet ist.

## Patentansprüche

1. Brille, umfassend
a) mindestens eine Brillenscheibe (3),
b) eine Nasenausnehmung (7), und
c) eine im Bereich (6) der Nasenausnehmung (7) vorgesehene Nasenauflegeteil-Anordnung (5) mit
d) zwei verschwenkbaren Nasenauflegeteilen (9), wobei jedes Nasenauflegeteil (9) aufweist
e) einen Tragkörper (10), der aus einem ersten Material gebildet ist, und
f) ein Kissenteil (11), das drehfest mit dem Tragkörper (10) verbunden ist und aus einem zweiten Material gebildet ist, wobei sich das zweite Material des Kissenteils (11) von dem ersten Material des Tragkörpers (10) unterscheidet und weicher als das erste Material des Tragkörpers (10) ist, und
g) zwei Lageraufnahmen (16) zur Schwenk-Lagerung der Nasenauflegeteile (9), wobei jede Lageraufnahme (16) und der dieser zugeordnete Tragkörper (10) miteinander in Rastverbindung stehen.

2. Brille nach Anspruch 1, **dadurch gekennzeichnet, dass** jedes Nasenauflegeteil (9) eine Längsmittelachse (28) aufweist, wobei das Nasenauflegeteil (9) um die Längsmittelachse (28) rastend verschwenkbar ist.

3. Brille nach Anspruch 1 oder 2, **dadurch gekennzeichnet, dass** zwischen der Lageraufnahme (16) und dem zugehörigen Tragkörper (10) eine jeweilige Rastverstellung von 5° bis 60°, vorzugsweise von 10° bis 40° und am bevorzugtesten von 15° bis 30° vorgesehen ist.

4. Brille nach einem der vorherigen Ansprüche, **dadurch gekennzeichnet, dass** eine Schwenkkraft von 20 N bis 80 N, vorzugsweise von 40 N bis 60 N, zur Verschwenkung eines Nasenauflegeteils (9) erforderlich ist.

5. Brille nach einem der vorherigen Ansprüche, **dadurch gekennzeichnet, dass** jeder Tragkörper (10) mindestens ein erstes Rastmittel (35) aufweist.

6. Brille nach Anspruch 5, **dadurch gekennzeichnet, dass** jede Lageraufnahme (16) mindestens ein zweites Rastmittel (25) aufweist, das mit dem mindestens einen ersten Rastmittel (35) des zugehörigen Tragkörpers (10) in Rastverbindung steht.

7. Brille nach einem der Ansprüche 5 oder 6, **dadurch gekennzeichnet, dass** das mindestens eine erste und/oder zweite Rastmittel (25, 35) durch mindestens einen vorspringenden Rastzahn gebildet ist, wobei vorzugsweise der mindestens eine Rastzahn eine Höhe zwischen 0,05 mm und 0,5 mm, insbesondere zwischen 0,07 mm und 0,2 mm aufweist.

8. Brille nach Anspruch 5 oder 6, **dadurch gekennzeichnet, dass** jede Lageraufnahme (16) einen Lageraufnahme-Zylinderabschnitt (24) aufweist, wobei das mindestens eine zweite Rastmittel (25) von dem Lageraufnahme-Zylinderabschnitt (24) radial vorspringt.

9. Brille nach Anspruch 8, **dadurch gekennzeichnet, dass** jeder Tragkörper (10) einen Tragkörper-Zylinderabschnitt (34) zur Verbindung mit dem Lageraufnahme-Zylinderabschnitt (24) aufweist, wobei das mindestens eine erste Rastmittel (35) von dem Tragkörper-Zylinderabschnitt (34) radial vorspringt.

10. Brille nach einem der vorherigen Ansprüche, **dadurch gekennzeichnet, dass** jeder Tragkörper (10) eine Kugeldruckhärte von mindestens 90 MPa aufweist.

11. Brille nach einem der vorherigen Ansprüche, **dadurch gekennzeichnet, dass** jedes Kissenteil (11) eine Härte von höchstens 60 Shore A aufweist.

12. Brille nach einem der vorherigen Ansprüche, **dadurch gekennzeichnet, dass** jede Lageraufnahme (16) durch ein drittes Material begrenzt ist, das härter als das zweite Material des Kissenteils (11) ist und vorzugsweise eine Kugeldruckhärte aufweist, die vergleichbar mit der des Tragekörpers (10) ist und insbesondere mindestens 90 MPa beträgt.

13. Brille nach einem der vorherigen Ansprüche, **dadurch gekennzeichnet, dass** die Tragkörper (10) und die Lageraufnahme (16) über eine Schnappverbindung zusammengehalten sind.

14. Brille nach einem der vorherigen Ansprüche, **dadurch gekennzeichnet, dass** die Lageraufnahmen (16) in einem Brillenrahmen (2) ausgebildet sind.

15. Brille nach einem der Ansprüche 1 bis 13, **dadurch gekennzeichnet, dass** die Lageraufnahmen (16) in einem separaten, vorzugsweise gemeinsamen Adapterstück (8) ausgebildet sind, das an einem Brillenrahmen (2) angebracht ist.
